# EUROPÄISCHE PATENTSCHRIFT

(11) **EP 3 452 846 B1**
(45) Veröffentlichungstag und Bekanntmachung des Hinweises auf die Patenterteilung: **11.03.2020**
(21) Anmeldenummer: 17722416.9
(22) Anmeldetag: 04.05.2017
(51) Int. Cl.: G01S 13/75, G06K 19/07

(54) **SYSTEM UND VERFAHREN ZUR BESTIMMUNG DER POSITION EINES TRANSPORTFAHRZEUGS SOWIE TRANSPORTFAHRZEUG**
SYSTEM AND METHOD FOR DETERMINING THE POSITION OF A TRANSPORT VEHICLE, AND TRANSPORT VEHICLE
SYSTÈME ET PROCÉDÉ DE DÉTERMINATION DE LA POSITION D'UN VÉHICULE DE TRANSPORT AINSI QUE VÉHICULE DE TRANSPORT

(30) Priorität: 06.05.2016 DE 102016108446
(43) Veröffentlichungstag der Anmeldung: 13.03.2019
(73) Patentinhaber: Konecranes Global Corporation, 05830 Hyvinkää (FI)
(72) Erfinder: AHMADIAN, Mohammed, 41468 Neuss (DE); RUPPRECHT, Karsten, 52074 Aachen (DE)
(74) Vertreter: Moser Götze & Partner Patentanwälte mbB
(86) Internationale Anmeldenummer: PCT/EP2017/060686
(87) Internationale Veröffentlichungsnummer: WO 2017/191271

(56) Entgegenhaltungen:
- EP-A2- 0 494 114
- WO-A1-91/20067
- WO-A2-2008/034742
- DE-A1-102010 035 155

## Beschreibung

Die Erfindung betrifft ein System zur Bestimmung der Position eines über einen Flurboden verfahrbaren Transportfahrzeugs, insbesondere eines Schwerlast-Transportfahrzeugs, umfassend eine Antenne, die an einer Unterseite des Transportfahrzeugs angebracht ist, und einen Transponder, der an einer vorbestimmten Stelle in den Flurboden eingebracht ist und mittels eines von der Antenne während eines Sendeintervalls mit vorgegebener Länge erzeugbaren Sendefelds aufgeladen wird, und wobei anschließend ein Auswerteintervall mit vorgegebener Länge gestartet wird, um ein als Antwort auf das Aufladen gesendetes Signal des Transponders während des Auswerteintervalls mittels einer Auswerteeinheit auszuwerten.

Auch betrifft die Erfindung ein Transportfahrzeug mit einem solchen System.

Des Weiteren betrifft die Erfindung ein Verfahren zur Bestimmung der Position eines über einen Flurboden verfahrbaren Transportfahrzeugs, insbesondere eines Schwerlast-Transportfahrzeugs, wobei mittels einer Antenne, die an einer Unterseite des Transportfahrzeugs angebracht ist, ein Transponder, der an einer vorbestimmten Stelle in den Flurboden eingebracht ist, während eines Sendeintervalls mit vorgegebener Länge aufgeladen wird und wobei anschließend ein Auswerteintervall mit vorgegebener Länge gestartet wird, um ein als Antwort auf das Aufladen gesendetes Signal des Transponders während des Auswerteintervalls mittels einer Auswerteeinheit auszuwerten.

Aus der deutschen Offenlegungsschrift DE 10 2006 044 645 A1 sind unbemannte Containertransportfahrzeuge bekannt, die ein Antenne-Transponder-System aufweisen. Mittels der am Containertransportfahrzeug angeordneten Antenne können in einen Flurboden eingelassene Transponder detektiert und deren Koordinaten als codierte Information abgerufen und ausgewertet werden, um ein Navigieren der unbemannten Containertransportfahrzeuge zu ermöglichen.

In diesem Zusammenhang ist auch der Einsatz entsprechender Antenne-Transponder-Systeme bekannt, die nach dem so genannten Halbduplex-Verfahren arbeiten und einen passiven RFID-Transponder umfassen. Bei dem vorliegend angewendeten Messprinzip handelt es sich daher um die Positionsbestimmung einer Antenne über einen entsprechenden Transponder. Hierbei sendet die Antenne für die Dauer eines vorbestimmten Sendeintervalls ein auch als Sendefeld bezeichnetes elektromagnetisches Feld aus, durch welches der Transponder energetisch aufgeladen wird, um eine Antwort an die Antenne senden zu können. Nach Ablauf dieses Sendeintervalls schaltet die Antenne das Sendefeld ab und der aufgeladene Transponder sendet für die Dauer eines Auswerteintervalls einen Code als Antwort aus, der als Information beispielsweise seine Koordinaten enthalten kann. Mittels einer Auswerteeinheit des Systems wird der vom Transponder übertragene Code während des Auswerteintervalls ausgelesen und decodiert. Das Auswerten umfasst neben dem Auslesen beziehungsweise Decodieren des Codes auch das von der Auswerteeinheit zur Vermessung durchgeführte Vergleichen von Spannungen, die in Spulen der Antenne induziert werden. Hierbei sind mehrere Spulen für die Fahrtrichtung und mehrere Spulen quer dazu angebracht. Mittels der induzierten Spannungen wird dann die Position des über seinen Code eindeutig identifizierbaren Transponders in Bezug auf die Antennenabmessungen und darüber die Position des Transportfahrzeugs berechnet. Nach Ablauf des Auswerteintervalls beginnt der nächste Messzyklus mit einem weiteren Sendeintervall zum Aufladen und einem weiteren Auswerteintervall zum Auswerten des Transponders. Der Transponder muss sowohl während des Sendeintervalls als auch während des Auswerteintervalls vertikal unterhalb der Antenne und somit in der Draufsicht gesehen innerhalb der Antennenabmessungen angeordnet sein. Die Antennenabmessungen entsprechen damit in ihrer vertikalen Projektion auf den Flurboden einem Messfeld der Antenne, das einem Wirkbereich des Sendefeldes entspricht und zugleich für das Auswerten wirksam ist. Außerhalb des Messfelds ist das Aufladen beziehungsweise anschließende Auslesen und Vermessen des Transponders nicht möglich.

Wenn sich der Transponder zu Beginn des Sendeintervalls und bei Höchstgeschwindigkeit des Transportfahrzeugs noch nicht vertikal unterhalb der Antenne und somit in einer Art Worst-Case-Szenario beispielsweise noch für die Dauer von 1ms knapp außerhalb des Wirkbereichs des Sendefelds und damit außerhalb des Messfelds der Antenne befindet, ist kein wirksamer Messzyklus und somit kein wirksames Aufladen und Auswerten eines Antwortsignals des Transponders möglich. In diesem Fall muss zunächst der Ablauf des bereits seit 1ms begonnenen ersten Messzyklus und anschließend ein weiterer vollständiger Messzyklus abgewartet werden, um ein wirksames Aufladen und Auslesen sowie Vermessen des Transponders zu ermöglichen. Um zuverlässig einen wirksamen Messzyklus sicherzustellen, muss also das Messfeld der Antenne im Hinblick auf eine gewünschte Höchstgeschwindigkeit des Transportfahrzeugs entsprechend groß dimensioniert sein. Bei einer Höchstgeschwindigkeit von 6m/s, einem Sendeintervall von 15ms und einem Auswerteintervall von 18ms ergibt sich also in Fahrtrichtung des Transportfahrzeugs gesehen ein erforderliches Messfeld mit einer Länge von 6 m/s x (15ms + 18ms) x 2 = 396mm. Für ein derart langes Messfeld beträgt die entsprechende Längenabmessung einer solchen Antenne in der Regel mehr als 1000mm. Bekannte Längenabmessungen für die unten näher beschriebenen Transportfahrzeuge sind beispielsweise 1160mm oder 1250mm. Bei einer Höchstgeschwindigkeit von 10 m/s ergibt sich bei gleicher Berechnungsweise für das erforderliche Messfeld bereits eine Länge von 660mm. Um derart große Messfelder zu realisieren, wären Antennen mit noch größeren Abmessungen zu verbauen. Da an den Unterseiten der betreffenden Transportfahrzeuge in der Regel jedoch nur ein begrenzter Bauraum zur Unterbringung entsprechender Antennen verfügbar ist, lassen sich oft nur verhältnismäßig kleine Antennen verbauen, die nur entsprechend geringe Höchstgeschwindigkeiten zulassen. Für größere Höchstgeschwindigkeiten und hierfür erforderliche größere Antennen wären fahrzeugseitig aufwendige Neukonstruktionen erforderlich.

Auch die Dokumente EP 0 494 114 A2 sowie WO 91/20067 A1 offenbaren Antenne-Transponder-Systeme.

Aus der DE 10 2010 035 155 A1 ist ein Verfahren zur Positionsbestimmung mittels RFID-Tags bekannt.

Der Erfindung liegt die Aufgabe zugrunde, ein verbessertes System zur Bestimmung der Position eines Transportfahrzeugs, ein verbessertes Transportfahrzeug mit einem solchen System sowie ein verbessertes Verfahren zur Bestimmung der Position eines Transportfahrzeugs bereit zu stellen.

Diese Aufgabe wird durch ein System mit den Merkmalen des Anspruchs 1, ein Transportfahrzeug mit den Merkmalen des Anspruchs 5 und durch ein Verfahren mit den Merkmalen des Anspruchs 6 gelöst. In den abhängigen Ansprüchen sind vorteilhafte Ausgestaltungen der Erfindung angegeben.

Um ein System zur Bestimmung der Position eines über einen Flurboden verfahrbaren Transportfahrzeugs, insbesondere eines Schwerlast-Transportfahrzeugs, umfassend eine Antenne, die an einer Unterseite des Transportfahrzeugs angebracht ist, und einen Transponder, der an einer vorbestimmten Stelle in den Flurboden eingebracht ist und mittels eines von der Antenne während eines Sendeintervalls mit vorgegebener Länge erzeugbaren Sendefelds aufgeladen wird und wobei anschließend ein Auswerteintervall mit vorgegebener Länge gestartet wird, um ein als Antwort auf das Aufladen gesendetes Signal des Transponders während des Auswerteintervalls mittels einer Auswerteeinheit auszuwerten, zu verbessern, wird vorgeschlagen, dass das System derart ausgebildet ist, dass das Auswerteintervall vor Ablauf seiner vorgegebenen Länge abgebrochen wird und ein neues Sendeintervall gestartet wird, wenn während eines Detektionsintervalls mit vorgegebener Länge innerhalb des Auswerteintervalls kein Signal des Transponders detektiert wird. Dadurch lässt sich in vorteilhafter Weise die Wartezeit zwischen zwei Messzyklen beziehungsweise den Aufladephasen der Halbduplex-Transponder während der Sendeintervalle verkürzen, so dass die Antenne wie unten beschrieben verkleinert werden kann ohne die Höchstgeschwindigkeit verringern zu müssen. Es ist darüber hinaus sogar möglich, größere Höchstgeschwindigkeiten mit gleichen oder kleineren Antennenabmessungen zu realisieren. Somit kann trotz geringen Bauraums ein entsprechendes System bei den vorliegenden Transportfahrzeugen eingesetzt werden.

In vorteilhafter Weise ist außerdem vorgesehen, dass das neue Sendeintervall erst nach vollständigem Ablauf des Auswerteintervalls gestartet wird, wenn während des Detektionsintervalls ein Signal des Transponders detektiert wird.

Gemäß einer weiteren vorteilhaften Ausgestaltung ist vorgesehen, dass das Sendeintervall weniger als 10ms, vorzugsweise 8ms, das Detektionsintervall weniger als 5ms, vorzugsweise 2ms, und das Auswerteintervall weniger als 20ms, vorzugsweise 18ms, dauert. Messungen haben ergeben, dass bereits eine Dauer des Sendeintervalls von 8ms, in jedem Fall jedoch weniger als 10ms, ausreichen kann. Hiermit ist die anhand des unten beschriebenen Ausführungsbeispiels vorteilhafte Verringerung der Antennenabmessungen auch für eine Höchstgeschwindigkeit des Transportfahrzeugs von 10m/s realisierbar und gegenüber dem oben beschriebenen Stand der Technik mit geringerem Platzbedarf einsetzbar.

In vorteilhafter Weise ist außerdem vorgesehen, dass das Sendefeld einen über Antennenabmessungen der Antenne hinaus erweiterten Wirkbereich aufweist, der sich insbesondere in und entgegen einer Fahrtrichtung des Transportfahrzeugs erstreckt. Dies wirkt sich vorteilhaft aus, da das Transportfahrzeug vorwärts wie rückwärts in beziehungsweise entgegen der Fahrtrichtung verfahrbar ist und folglich entsprechend symmetrische Eigenschaften der Antenne vorliegen müssen. Durch eine derartige Feldverteilung des Sendefeldes können die Antennenabmessungen weiter verringert werden, ohne zugleich die Höchstgeschwindigkeit reduzieren zu müssen. Erst nach dem Aufladen, das heißt nach dem Ablauf eines wirksamen Sendeintervalls, muss sich der Transponder in der Draufsicht gesehen innerhalb der der Antennenabmessungen befinden.

In konstruktiv einfacher Weise kann ein Transportfahrzeug ein entsprechendes System aufweisen und als fahrerloses Transportfahrzeug ausgebildet sein. Durch das beschriebene System kann das Transportfahrzeug im fahrerlosen Betrieb besonders sicher und zuverlässig automatisch geführt und navigiert werden.

Um ein Verfahren zur Bestimmung der Position eines über einen Flurboden verfahrbaren Transportfahrzeugs, insbesondere eines Schwerlast-Transportfahrzeugs, wobei mittels einer Antenne, die an einer Unterseite des Transportfahrzeugs angebracht ist, ein Transponder, der an einer vorbestimmten Stelle in den Flurboden eingebracht ist, während eines Sendeintervalls mit vorgegebener Länge aufgeladen wird, und wobei anschließend ein Auswerteintervall mit vorgegebener Länge gestartet wird, um ein als Antwort auf das Aufladen gesendetes Signal des Transponders während des Auswerteintervalls mittels einer Auswerteeinheit auszuwerten, zu verbessern, wird vorgeschlagen, dass das Auswerteintervall vor Ablauf seiner vorgegebenen Länge abgebrochen wird und ein neues Sendeintervall gestartet wird, wenn während eines Detektionsintervalls mit vorgegebener Länge innerhalb des Auswerteintervalls kein Signal des Transponders detektiert wird. Dadurch ergeben sich die oben bereits hinsichtlich des Systems beschriebenen Vorteile analog, insbesondere die Möglichkeit verkleinerter Antennenabmessungen bei zumindest gleichbleibender oder sogar gesteigerter Höchstgeschwindigkeit.

In vorteilhafter Weise ist außerdem vorgesehen, dass das neue Sendeintervall erst nach vollständigem Ablauf des Auswerteintervalls gestartet wird, wenn während des Detektionsintervalls ein Signal des Transponders detektiert wird.

Um eine Höchstgeschwindigkeit von beispielsweise 10m/s mit vergleichsweise geringem Platzbedarf der Antenne zu realisieren, kann vorgesehen sein, dass das Sendeintervall weniger als 10ms, vorzugsweise 8ms, das Detektionsintervall weniger als 5ms, vorzugsweise 2ms, und das Auswerteintervall weniger als 20ms, vorzugsweise 18ms, dauert.

Eine noch weitergehende Verringerung des Platzbedarfs für die Antenne lässt sich dadurch erreichen, dass das Sendefeld einen über Antennenabmessungen der Antenne hinaus erweiterten Wirkbereich aufweist, der sich insbesondere in und entgegen einer Fahrtrichtung des Transportfahrzeugs erstreckt.

Ein Ausführungsbeispiel der Erfindung wird anhand der nachfolgenden Beschreibung näher erläutert. Es zeigen:
Figur 1 eine perspektivische Ansicht eines Transportfahrzeugs,
Figur 2 eine Ansicht einer Antenne des Systems zur Bestimmung der Position des Transportfahrzeugs,
Figur 3 einen Sendeverlauf der Antenne für den Fall, dass kein Transponder detektierbar ist und
Figur 4 Sendeverläufe der Antenne sowie eines detektierten Transponders.

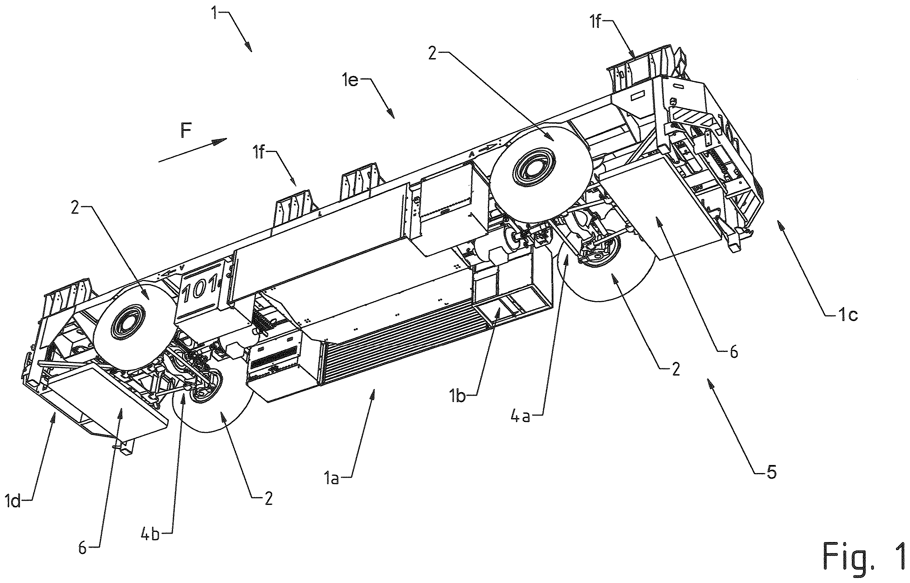

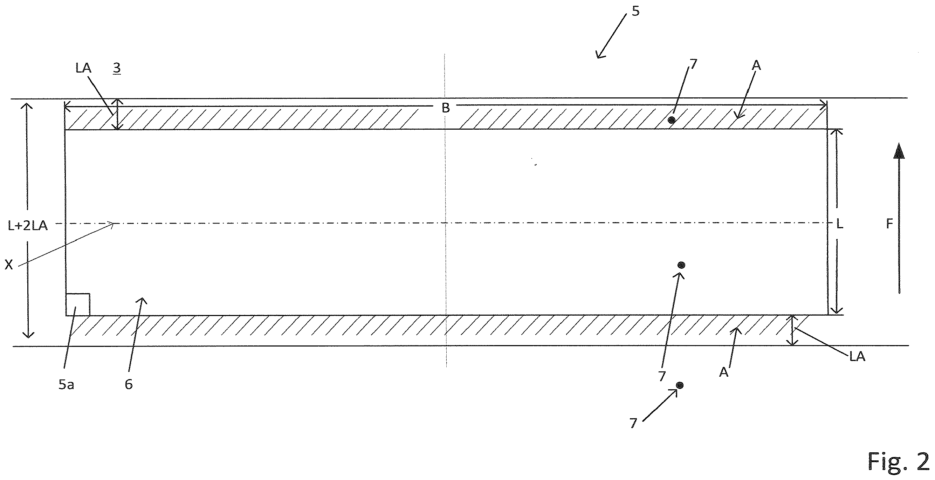

In der Figur 1 ist eine perspektivische Ansicht eines Transportfahrzeugs 1 gezeigt. Dargestellt ist insbesondere eine Unterseite 1a des Transportfahrzeugs 1. Das Transportfahrzeug 1 ist für den Schwerlasttransport ausgebildet und weist dementsprechend an seiner Oberseite 1e eine Ladefläche auf, insbesondere zur Aufnahme und zum Transport von Wechselbehältern oder ISO-Containern mit einer Länge von 20, 40 oder 45 Fuß. Derartige Container können in beladenem Zustand bis zu 45 t wiegen. Die Ladefläche wird üblicher Weise von mehreren voneinander beabstandeten Führungselementen 1f begrenzt, die auch als Einweiser bezeichnet werden und einen vom Transportfahrzeug 1 aufzunehmenden Container beziehungsweise dessen Eckbeschläge auf die Ladefläche führen. Hierfür erstrecken sich die Führungselemente 1f mit ihren Führungsflächen schräg nach außen und oben von der Ladefläche weg. Über Räder 2 ist das Transportfahrzeug 1 frei auf einem Flurboden 3 (siehe Figur 2) und damit flurgebunden, jedoch nicht schienengebunden verfahrbar. Dementsprechend ist das Transportfahrzeug 1 von Schienenfahrzeugen und insbesondere von Eisenbahnwagons zu unterscheiden. Die Räder 2 sind jeweils mit einer Bereifung versehen, die vorzugsweise eine mit Luft befüllte Gummibereifung im Sinne von Pneus ist. Außerdem umfasst das Transportfahrzeug 1 einen Fahrantrieb mit einem beispielsweise als Elektromotor oder Verbrennungsmotor ausgebildeten Motor und einem Getriebe, um hierüber die paarweise auf einer Vorderachse 4a und einer Hinterachse 4b gelagerten Räder 2 anzutreiben. Das Transportfahrzeug 1 kann hierbei vorwärts in und rückwärts entgegen der Fahrtrichtung F fahren.

Des Weiteren ist das Transportfahrzeug 1 als fahrerloses Transportfahrzeug 1 ausgebildet und dementsprechend im Sinne eines so genannten AGV (Automated Guided Vehicle) unbemannt und automatisch geführt betreibbar. Fahrerlose, aber von einer Bedienperson manuell ferngesteuerte Fahrzeuge sind hiervon ausgenommen. Dementsprechend umfasst das Transportfahrzeug 1 eine Fahrzeugsteuerung 1b, die zur automatischen Navigation auch ein System 5 der eingangs beschriebenen Art zur Bestimmung der Position des Transportfahrzeugs 1 aufweist. Das System 5 umfasst mindestens eine Antenne 6, im vorliegenden Ausführungsbeispiel zwei Antennen 6, und mindestens einen an einer vorbestimmten Stelle in den Flurboden 3 eingebrachten Transponder 7, vorzugsweise jedoch eine Vielzahl von Transpondern 7, die rasterartig an vorbestimmten Stellen in den Flurboden 3 eingebracht sind (siehe Figur 2). Hinsichtlich des Aufbaus und der Funktionsweise des Systems 5 gelten ergänzend zu den nachfolgend beschriebenen erfindungsgemäßen Unterschieden die einleitenden Ausführungen entsprechend.

Wie in Figur 1 erkennbar, sind die zwei Antennen 6 an der Unterseite 1a vorgesehen, von denen eine zwischen einem vorderen Ende 1c des Transportfahrzeugs 1 und der Vorderachse 4a und eine zwischen einem hinteren Ende 1d des Transportfahrzeugs 1 und der Hinterachse 4b angeordnet ist.

In der Figur 2 ist eine Ansicht einer der beiden jeweils als Sensor dienenden Antennen 6 des Systems 5 gezeigt. Dargestellt ist eine Draufsicht auf die Antenne 6 in ihrer Einbauposition im nicht dargestellten Transportfahrzeug 1, in der sie sich in einer zum Flurboden 3 parallelen Ebene erstreckt. Die Ausführungen zu dieser Antenne 6 gelten entsprechend für beide Antennen 6. Die Antenne 6 beziehungsweise ihr äußerer Blechkörper hat in der Draufsicht einen plattenförmigen und im Wesentlichen rechteckigen Aufbau mit einer sich in Fahrtrichtung F des Transportfahrzeugs 1 (siehe auch Figur 1) erstreckenden Länge L von beispielsweise 700mm und einer sich quer hierzu erstreckenden Breite B, die beispielsweise 1500 bis 2000mm betragen kann. An den in und entgegen der Fahrtrichtung F zeigenden Seiten ist der Blechkörper der Antenne 6 so gebogen, dass das von der Antenne 6 zum Aufladen der Transponder 7 gesendete elektromagnetische Feld nicht nur vertikal nach unten, sondern schräg in beziehungsweise entgegen der Fahrtrichtung F aufgebaut wird. Hierdurch ergibt sich über die Antennenabmessungen hinaus jeweils in und entgegen der Fahrtrichtung F ein um beispielsweise 10cm erweiterter Wirkbereich A des von der Antenne 6 gesendeten elektromagnetischen Felds. Der Wirkbereich dieses Sendefeldes umfasst somit die Antennenabmessungen zuzüglich der beiden erweiterten Wirkbereiche A. Dadurch kann ein Transponder 7 bereits aufgeladen werden, wenn sich der Transponder 7 in der Draufsicht gemäß Figur 2 gesehen noch außerhalb der Antennenabmessungen der Antenne 6 befindet, die Antenne 6 mit ihren Antennenabmessungen also noch nicht vertikal oberhalb des Transponders 7 positioniert ist. Für ein Aufladen muss sich der Transponder 7 lediglich in der Draufsicht gemäß Figur 2 gesehen in Fahrtrichtung F vor der Antennenabmessung und hierbei innerhalb des erweiterten Wirkbereichs A befinden.

In der Figur 2 ist exemplarisch außer dem im erweiterten Wirkbereich A angeordneten Transponder 7 auch ein zweiter Transponder 7, der sich vertikal unterhalb der Antenne 6 befindet, und ein dritter Transponder 7, der sich außerhalb des Sendefeldes befindet, dargestellt. Die als passive Markierungselemente dienenden Transponder 7 sind vorzugsweise als RFID-Transponder, insbesondere als Halbduplex-Transponder, ausgebildet.

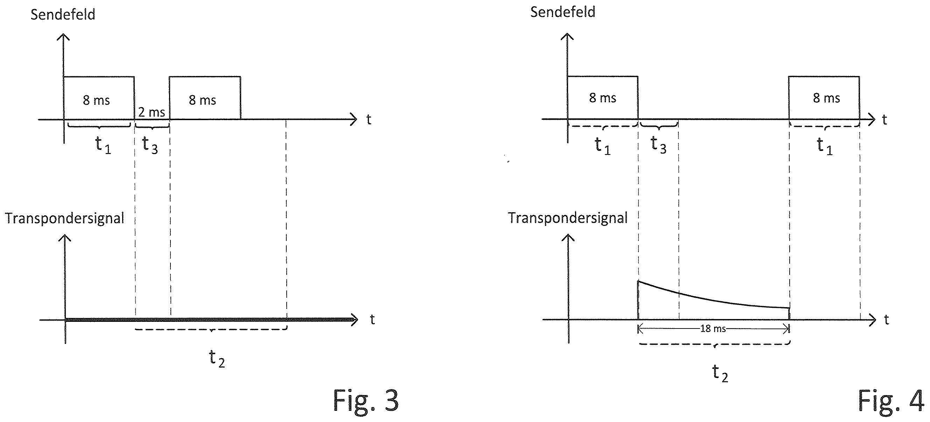

In dem Blechkörper der Antenne 6 sind unterschiedliche Spulentypen eingebaut (nicht dargestellt). Eine Spule ist vorgesehen, um den Transponder 7 energetisch aufzuladen. Eine weitere Spule ist vorgesehen, um als Antwort ein Signal des Transponders 7 empfangen und somit dessen Code auslesen beziehungsweise decodieren zu können. Darüber hinaus sind in der Antenne 6 mehrere Spulen zur genauen zweidimensionalen Vermessung der Position des Transponders 7 unterhalb der Antenne 6 in Fahrtrichtung F und quer zur Fahrtrichtung F angeordnet, da der Transponder 7 in diesen Spulen Spannungen induziert. Hierbei kann im Rahmen des Auswertens außerdem eine Überwachung beziehungsweise Überprüfung erfolgen, ob der Transponder 7 die sich parallel zur Breite B erstreckende Mittellinie X der Antenne 6 passiert. Der Transponder 7 muss sich jedoch nicht nur für das Auswerten zur Vermessung seiner Position vertikal unterhalb der Antennenabmessungen befinden, sondern auch für das nachfolgend anhand der Figuren 3 und 4 beschriebene Detektieren. Die erweiterten Wirkbereiche A sind also nicht Teil des für das Auswerten und Detektieren wirksamen Messfeldes. Mit anderen Worten ist der Wirkbereich des Messfeldes also gegenüber dem Wirkbereich des Sendefeldes um denjenigen erweiterten Wirkbereich A verkleinert, der entgegen der Fahrtrichtung F zeigt. Der in Richtung der Fahrtrichtung F zeigende erweiterte Wirkbereich A ist hingegen wie oben beschrieben Teil des Wirkbereichs des Sendefeldes und damit auch Teil des für das Aufladen wirksamen Messfeldes der Antenne 6.

Das Detektieren stellt eine erweiterte Funktionalität sowohl für das System 5 zur Bestimmung der Position des Transportfahrzeugs 1 als auch im Hinblick auf das hiermit durchführbare Verfahren zur Bestimmung der Position des Transportfahrzeugs 1 dar. Gemäß dieser erweiterten Funktionalität ist vorgesehen, dass ein Messzyklus ein Sendeintervall t1 und ein sich daran anschließendes Auswerteintervall t2 umfasst, wobei das Auswerteintervall t2 jedoch eine variable Dauer aufweisen kann, je nachdem ob sich zu Beginn des Sendeintervalls t1 ein Transponder 7 innerhalb des oben beschriebenen Sendefeldes befindet und somit detektierbar ist oder nicht.

Die Figur 3 zeigt einen Sendeverlauf der Antenne 6 für den Fall, dass kein Transponder 7 beziehungsweise kein Transpondersignal detektierbar ist. Hierbei wird nach Ablauf des Sendeintervalls t1 das Sendefeld abgeschaltet und mit Beginn des Auswerteintervalls t2 für die Dauer eines Detektionsintervalls t3 überprüft, ob ein Signal eines Transponders 7 detektierbar ist. Das als Antwort auf die Aufladephase gesendete Signal umfasst einen Code, der als Information die Koordinaten des Transponders 7 enthält. Dieses Signal ist jedoch nur detektierbar, wenn sich ein Transponder 7 bereits zu Beginn eines Sendeintervalls t1 innerhalb des oben beschriebenen Wirkbereichs des Sendefeldes befunden hat, so dass der Transponder 7 wirksam aufgeladen werden konnte, um als Antwort beziehungsweise Signal seinen Code an die Antenne 6 übertragen zu können. Das Sendeintervall t1 des Systems 5 entspricht der Aufladezeit der Transponder 7, im vorliegenden Ausführungsbeispiel vorzugsweise etwa 8ms und damit erheblich weniger als bei dem eingangs als Stand der Technik genannten Beispiel. Das Auswerteintervall t2 dauert in diesem Ausführungsbeispiel 18ms und das Detektionsintervall t3 dauert 2ms. Wenn bis zum Ablauf des Detektionsintervalls t3 kein Signal eines Transponders 7 detektiert werden kann (siehe unteres Diagramm in Figur 3), wird das Auswerteintervall t2 vorzeitig abgebrochen und ein zweiter Messzyklus mit einem neuen Sendeintervall t1 gestartet (siehe oberes Diagramm in Figur 3). Das zeitgleich mit dem Auswerteintervall t2 nach Ablauf des Sendeintervalls t1 beginnende Detektionsintervall t3 ist in diesem Fall also erheblich kürzer als das für ein vollständiges Auswerten benötigte Auswerteintervall t2 und läuft somit innerhalb des Auswerteintervalls t2 ab. Anders als im eingangs beschriebenen Stand der Technik muss das Auswerteintervall t2 somit nicht vollständig abgewartet werden, wenn sich im vorangegangenen Sendeintervall t1 kein Transponder 7 in einer für ein wirksames Aufladen ausreichend nahen Umgebung befunden hat.

Die Figur 4 zeigt Sendeverläufe der Antenne 6 (siehe oberes Diagramm) sowie eines detektierten Transponders 7 (siehe unteres Diagramm). In diesem Fall wird also innerhalb des Detektionsintervalls t3 ein Signal des Transponders 7 detektiert, so dass das Auswerteintervall t2 nicht bereits mit Ablauf von t3 abgebrochen wird. Das nächste Sendeintervall t1 des zweiten Messzyklus beginnt somit erst nach vollständigem Ablauf des Auswerteintervalls t2, vorliegend also nach 18ms.

Auf diese Weise können bei gleichbleibender Höchstgeschwindigkeit die Antennenabmessungen in Fahrtrichtung F verringert werden beziehungsweise mit gleichbleibenden Antennenabmessungen größere Höchstgeschwindigkeiten realisiert werden, da bei dem oben beschriebenen Worst-Case-Szenario der erste Messzyklus entsprechend um die Differenz aus der Dauer des Auswerteintervalls t2 und der Dauer des Detektionsintervalls t3 verkürzt werden kann. Dies gilt auch, wenn die Antenne 6 keinen erweiterten Wirkbereich A des Sendefeldes aufweist. Bei dem vorliegenden Ausführungsbeispiel ergibt sich damit für eine gewünschte Höchstgeschwindigkeit von 10m/s, einem Sendeintervall t1 von 8ms, einem Auswerteintervall t2 von 18ms und einem Detektionsintervall t3 von 2ms in Fahrtrichtung F des Transportfahrzeugs 1 gesehen ein erforderliches Messfeld mit einer Länge von 10 m/s x (8ms + 2ms + 8ms + 18 ms) = 360mm. Wenn die Antenne 6 so ausgebildet ist, dass ihr Sendefeld erweiterte Wirkbereiche A aufweist, kann die Länge L der Antenne 6 entsprechend verkürzt werden. Der Wirkbereich des Sendefelds der in Figur 2 dargestellten Antenne 6 ist in Fahrtrichtung F gesehen über die Länge L von 700 über beide Wirkbereiche A hinaus um eine Länge LA des erweiterten Wirkbereichs A von jeweils 100mm auf insgesamt 900m erweitert. Das wirksame Messfeld erstreckt sich in Fahrtrichtung F über die Länge L von 700mm und zusätzlich über eine Länge LA des erweiterten Wirkbereichs A von 100 mm, insgesamt also 800mm. Die Länge L der Antenne 6 von 700mm ist somit gegenüber der eingangs erwähnten Antenne des Standes der Technik mit einer Länge von 1160mm beziehungsweise 1250mm nicht nur kürzer, sondern auch zur Realisierung einer Erhöhung der Höchstgeschwindigkeit von 6m/s auf 10m/s geeignet.

Das Detektieren und Auswerten des Transponders 7, erfolgt über eine in Figur 2 schematisch dargestellte Auswerteeinheit 5a des Systems 5, die mit der Fahrzeugsteuerung 1b verbunden ist, um das Transportfahrzeug 1 automatisch geführt zu navigieren. In der Auswerteeinheit 5a wird dann ausgewertet und zur Fahrzeugsteuerung 1b übertragen, ob das Detektieren und das anschließende Auswerten, gegebenenfalls einschließlich der Überprüfung des Passierens der Mittellinie X, einen gültigen Wert liefert.

Auch ist es denkbar, dass das Transportfahrzeug 1 als so genannter Terminal Tractor oder Terminal Truck ausgebildet ist. In diesem Fall kann das Transportfahrzeug 1 als Zugmaschine für einen die Ladefläche und Einweiser aufweisenden Anhänger eingesetzt werden, um hiermit eine Art Sattelzug zu bilden. Die vorstehenden Ausführungen gelten daher analog auch für derartige Zugmaschinen.

### Bezugszeichenliste

- 1: Transportfahrzeug
- 1a: Unterseite
- 1 b: Fahrzeugsteuerung
- 1c: vorderes Ende
- 1d: hinteres Ende
- 1e: Oberseite
- 1f: Führungselement
- 2: Rad
- 3: Flurboden
- 4a: Vorderachse
- 4b: Hinterachse
- 5: System
- 5a: Auswerteeinheit
- 6: Antenne
- 7: Transponder

- A: erweiterter Wirkbereich
- B: Breite
- F: Fahrtrichtung
- L: Länge
- LA: Länge des erweiterten Wirkbereichs
- t1: Sendeintervall
- t2: Auswerteintervall
- t3: Detektionsintervall
- X: Mittellinie

## Patentansprüche

1. System (5) zur Bestimmung der Position eines über einen Flurboden (3) verfahrbaren Transportfahrzeugs (1), insbesondere eines Schwerlast-Transportfahrzeugs, umfassend eine Antenne (6), die an einer Unterseite (1a) des Transportfahrzeugs (1) angebracht ist, und einen Transponder (7), der an einer vorbestimmten Stelle in den Flurboden (3) eingebracht ist und mittels eines von der Antenne (6) während eines Sendeintervalls (t1) mit vorgegebener Länge erzeugbaren Sendefelds aufgeladen wird, und wobei anschließend ein Auswerteintervall (t2) mit vorgegebener Länge gestartet wird, um ein als Antwort auf das Aufladen gesendetes Signal des Transponders (7) während des Auswerteintervalls (t2) mittels einer Auswerteeinheit (5a) auszuwerten, **dadurch gekennzeichnet, dass** das System (5) derart ausgebildet ist, dass das Auswerteintervall (t2) vor Ablauf seiner vorgegebenen Länge abgebrochen wird und ein neues Sendeintervall (t1) gestartet wird, wenn während eines Detektionsintervalls (t3) mit vorgegebener Länge innerhalb des Auswerteintervalls (t2) kein Signal des Transponders (7) detektiert wird.

2. System (5) nach Anspruch 1, **dadurch gekennzeichnet, dass** das neue Sendeintervall (t1) erst nach vollständigem Ablauf des Auswerteintervalls (t2) gestartet wird, wenn während des Detektionsintervalls (t3) ein Signal des Transponders (7) detektiert wird.

3. System (5) nach Anspruch 1 oder 2, **dadurch gekennzeichnet, dass** das Sendeintervall (t1) weniger als 10ms, vorzugsweise 8ms, das Detektionsintervall (t3) weniger als 5ms, vorzugsweise 2ms, und das Auswerteintervall (t2) weniger als 20ms, vorzugsweise 18ms, dauert.

4. System (5) nach einem der Ansprüche 1 bis 3, **dadurch gekennzeichnet, dass** das Sendefeld einen über Antennenabmessungen (L, B) der Antenne (6) hinaus erweiterten Wirkbereich (A) aufweist, der sich insbesondere in und entgegen einer Fahrtrichtung (F) des Transportfahrzeugs (1) erstreckt.

5. Transportfahrzeug (1), **dadurch gekennzeichnet, dass** das Transportfahrzeug (1) ein System (5) nach einem der Ansprüche 1 bis 4 aufweist und als fahrerloses Transportfahrzeug (1) ausgebildet ist.

6. Verfahren zur Bestimmung der Position eines über einen Flurboden (3) verfahrbaren Transportfahrzeugs (1), insbesondere eines Schwerlast-Transportfahrzeugs, wobei mittels einer Antenne (6), die an einer Unterseite (1a) des Transportfahrzeugs (1) angebracht ist, ein Transponder (7), der an einer vorbestimmten Stelle in den Flurboden (3) eingebracht ist, während eines Sendeintervalls (t1) mit vorgegebener Länge aufgeladen wird, und wobei anschließend ein Auswerteintervall (t2) mit vorgegebener Länge gestartet wird, um ein als Antwort auf das Aufladen gesendetes Signal des Transponders (7) während des Auswerteintervalls (t2) mittels einer Auswerteeinheit (5a) auszuwerten, **dadurch gekennzeichnet, dass** das Auswerteintervall (t2) vor Ablauf seiner vorgegebenen Länge abgebrochen wird und ein neues Sendeintervall (t1) gestartet wird, wenn während eines Detektionsintervalls (t3) mit vorgegebener Länge innerhalb des Auswerteintervalls (t2) kein Signal des Transponders (7) detektiert wird.

7. Verfahren nach Anspruch 6, **dadurch gekennzeichnet, dass** das neue Sendeintervall (t1) erst nach vollständigem Ablauf des Auswerteintervalls (t2) gestartet wird, wenn während des Detektionsintervalls (t3) ein Signal des Transponders (7) detektiert wird.

8. Verfahren nach Anspruch 6 oder 7, **dadurch gekennzeichnet, dass** das Sendeintervall (t1) weniger als 10ms, vorzugsweise 8ms, das Detektionsintervall (t3) weniger als 5ms, vorzugsweise 2ms, und das Auswerteintervall (t2) weniger als 20ms, vorzugsweise 18ms, dauert.

9. Verfahren nach einem der Ansprüche 6 bis 8, **dadurch gekennzeichnet, dass** das Sendefeld einen über Antennenabmessungen (L, B) der Antenne (6) hinaus erweiterten Wirkbereich (A) aufweist, der sich insbesondere in und entgegen einer Fahrtrichtung (F) des Transportfahrzeugs (1) erstreckt.

## Claims

1. System (5) for determining the position of a transport vehicle (1) which can travel over a floor (3), in particular of a heavy-load transport vehicle, comprising an antenna (6), which is attached to a lower face (1a) of the transport vehicle (1), and a transponder (7), which is introduced into the floor (3) at a specific location and which is charged by means of a transmission field - which can be generated by the antenna (6) during a transmission interval (t1) with a preset length - and wherein an evaluation interval (t2) with a preset length is subsequently started in order to evaluate a signal of the transponder (7), transmitted as a response to the charging, during the evaluation interval (t2) by means of an evaluation unit (5a), **characterised in that** the system (5) is designed in such a way that the evaluation interval (t2) is interrupted before expiry of its preset length and a new transmission interval (t1) is started if, during a detection interval (t3) with a preset length within the evaluation interval (t2), no signal of the transponder (7) is detected.

2. System (5) as claimed in claim 1, **characterised in that** the new transmission interval (t1) is started only after full expiry of the evaluation interval (t2), if a signal of the transponder (7) is detected during the detection interval (t3).

3. System (5) as claimed in claim 1 or 2, **characterised in that** the transmission interval (t1) lasts less than 10 ms, preferably 8 ms, the detection interval (t3) lasts less than 5 ms, preferably 2 ms, and the evaluation interval (t2) lasts less than 20 ms, preferably 18 ms.

4. System (5) as claimed in any one of claims 1 to 3, **characterised in that** the transmission field comprises an effective area (A) extended beyond antenna dimensions (L, B) of the antenna (6) and extending, in particular, in and opposite to a travel direction (F) of the transport vehicle (1).

5. Transport vehicle (1), **characterised in that** the transport vehicle (1) comprises a system (5) as claimed in any one of claims 1 to 4 and is designed as a driverless transport vehicle (1).

6. Method for determining the position of a transport vehicle (1) which can travel over a floor (3), in particular of a heavy-load transport vehicle, wherein by means of an antenna (6), which is attached to a lower face (1a) of the transport vehicle (1), a transponder (7), which is introduced into the floor (3) at a specific location, is charged during a transmission interval (t1) with a preset length and wherein an evaluation interval (t2) with a preset length is subsequently started in order to evaluate a signal of the transponder (7), transmitted as a response to the charging, during the evaluation interval (t2) by means of an evaluation unit (5a), **characterised in that** the evaluation interval (t2) is interrupted before expiry of its preset length and a new transmission interval (t2) is started if, during a detection interval (t3) with a preset length within the evaluation interval (t2), no signal of the transponder (7) is detected.

7. Method as claimed in claim 6, **characterised in that** the new transmission interval (t1) is started only after full expiry of the evaluation interval (t2), if a signal of the transponder (7) is detected during the detection interval (t3).

8. Method as claimed in claim 6 or 7, **characterised in that** the transmission interval (t1) lasts less than 10 ms, preferably 8 ms, the detection interval (t3) lasts less than 5 ms, preferably 2 ms, and the evaluation interval (t2) lasts less than 20 ms, preferably 18 ms.

9. Method as claimed in any one of claims 6 to 8, **characterised in that** the transmission field comprises an effective area (A) extended beyond antenna dimensions (L, B) of the antenna (6) and extending, in particular, in and opposite to a travel direction (F) of the transport vehicle (1).

## Revendications

1. Système (5) de détermination de la position d'un véhicule de transport (1) déplaçable sur un sol (3), en particulier d'un véhicule de transport de charges lourdes, le système comprenant une antenne (6) qui est montée sur le côté inférieur (1a) du véhicule de transport (1), et un transpondeur (7) qui est introduit à un emplacement prédéterminé dans le sol (3) et qui est chargé au moyen de d'un champ d'émission pouvant être généré par l'antenne (6) pendant un intervalle d'émission (t1) avec une longueur prédéterminée, et un intervalle d'évaluation (t2) de longueur prédéterminée étant ensuite démarré pour évaluer un signal du transpondeur (7), qui a été émis en réponse à la charge, pendant l'intervalle d'évaluation (t2) au moyen d'une unité d'évaluation (5a), **caractérisé en ce que** le système (5) est formé de telle sorte que l'intervalle d'évaluation (t2) soit interrompu avant l'expiration de sa longueur prédéterminée et un nouvel intervalle de transmission (t1) est démarré si aucun signal du transpondeur (7) n'est détecté pendant un intervalle de détection (t3) de longueur prédéterminée dans l'intervalle d'évaluation (t2).

2. Système (5) selon la revendication 1, **caractérisé en ce que** le nouvel intervalle d'émission (t1) n'est démarré qu'après l'expiration complète de l'intervalle d'évaluation (t2) si un signal du transpondeur (7) est détecté pendant l'intervalle de détection (t3).

3. Système (5) selon la revendication 1 ou 2, **caractérisé en ce que** l'intervalle d'émission (t1) est inférieur à 10 ms, de préférence 8 ms, l'intervalle de détection (t3) est inférieur à 5 ms, de préférence 2 ms, et l'intervalle d'évaluation (t2) est inférieur à 20 ms, de préférence 18 ms.

4. Système (5) selon l'une des revendications 1 à 3, **caractérisé en ce que** le champ d'émission comporte une région active (A) qui est étendue au-delà des dimensions (L, B) de l'antenne (6) et qui s'étend notamment dans la direction de roulement (F) du véhicule de transport (1) et dans la direction opposée à celle-ci.

5. Véhicule de transport (1), **caractérisé en ce que** le véhicule de transport (1) comporte un système (5) selon l'une des revendications 1 à 4 et qui est conçu comme un véhicule de transport sans conducteur (1).

6. Procédé de détermination de la position d'un véhicule de transport (1) pouvant être déplacé sur un sol (3), en particulier d'un véhicule de transport de charges lourdes, un transpondeur (7) qui est introduit à un emplacement prédéterminé dans le sol (3) est chargée pendant un intervalle d'émission (t1) de longueur prédéterminée au moyen d'une antenne (6) qui est montée sur un côté inférieur (1a) du véhicule de transport (1), et un intervalle d'évaluation (t2) de longueur prédéterminée étant ensuite démarré pour évaluer un signal du transpondeur (7), qui a été émis en réponse à la charge pendant l'intervalle d'évaluation (t2), au moyen d'une unité d'évaluation (5a), **caractérisé en ce que** l'intervalle d'évaluation (t2) est interrompu avant l'expiration de sa longueur prédéterminée et un nouvel intervalle d'émission (t1) est démarré lorsque aucun signal du transpondeur (7) n'est détecté pendant un intervalle de détection (t3) de longueur prédéterminée dans l'intervalle d'évaluation (t2).

7. Procédé selon la revendication 6, **caractérisé en ce que** le nouvel intervalle d'émission (t1) n'est démarré qu'après l'expiration complète de l'intervalle d'évaluation (t2) si un signal du transpondeur (7) est détecté pendant l'intervalle de détection (t3).

8. Procédé selon la revendication 6 ou 7, **caractérisé en ce que** l'intervalle d'émission (t1) est inférieur à 10 ms, de préférence 8 ms, l'intervalle de détection (t3) est inférieur à 5 ms, de préférence 2 ms, et l'intervalle d'évaluation (t2) est inférieur à 20 ms, de préférence 18 ms.

9. Procédé selon l'une des revendications 6 à 8, **caractérisé en ce que** le champ d'émission comporte une région active (A) qui est étendue au-delà des dimensions (L, B) de l'antenne (6) et qui s'étend notamment dans la direction de roulement (F) du véhicule de transport (1) et dans la direction opposée à celle-ci.
